# EUROPEAN PATENT SPECIFICATION

(11) **EP 3 674 678 B1**
(45) Date of publication and mention of the grant of the patent: **13.12.2023**
(21) Application number: 19219458.7
(22) Date of filing: 23.12.2019
(51) Int. Cl.: G01L 19/00, G01L 19/10

(54) **PRESSURE GAUGE**
DRUCKSENSOR
CAPTEUR DE PRESSION

(30) Priority: 26.12.2018 TW 107147279
(43) Date of publication of application: 01.07.2020
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- EP-A2- 1 391 704
- US-A1- 2011 290 172
- US-B1- 6 763 725

## Description

### FIELD OF THE INVENTION

The present invention relates to a pressure gauge which avoids a split of the outer wall of the casing after connecting the body with the casing.

### BACKGROUND OF THE INVENTION

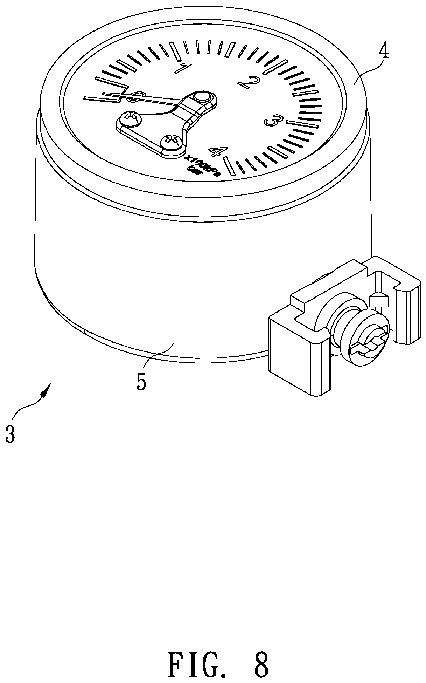

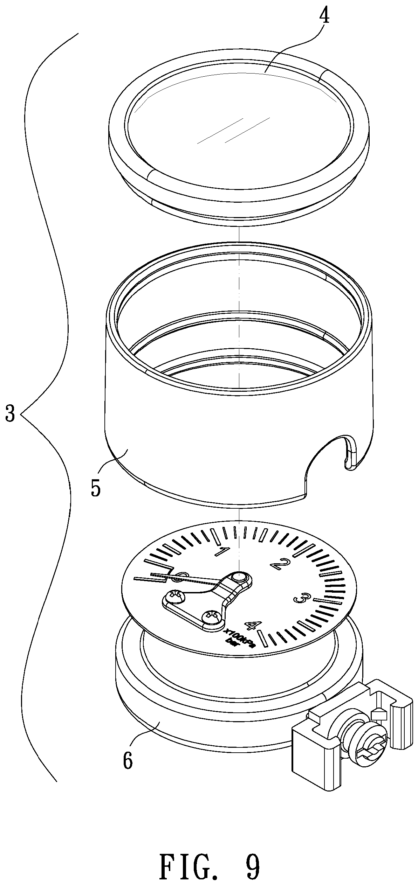

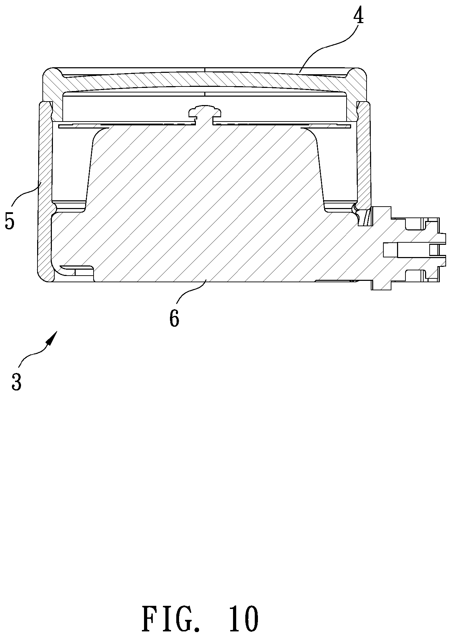

Referring to FIGS. 8-10, a conventional pressure gauge 3 contains a cover 4, a casing 5 and a body 6.

The cover 4 and the casing 5 are made of acrylic or AS material. When the cover 4, the casing 5 and the body are connected tightly, the cover 4 and the casing 5 are broken easily.

From patent application publication US 2011/0290172 A1 a pressure gauge having the features of the preamble of claim 1 is known. Patent specification US 6 763 725 B1 discloses a pressure gauge with a transparent cylindrical casing.

The present invention has arisen to mitigate and/or obviate the afore-described disadvantages.

### SUMMARY OF THE INVENTION

The primary aspect of the present invention is to provide a pressure gauge which avoids a split of the outer wall of the casing after connecting the body with the casing.

To obtain above-mentioned aspect, a pressure gauge is provided by the present invention that has the features of claim 1. Further embodiments are subject-matter of the dependent claims. The pressure gauge according to the invention comprises a body and a casing.

The body includes a scale disc fixed on a top thereof.

The casing is transparent and includes a close segment formed on a first end of the casing, an open segment formed on a second end of the casing, and multiple hooks spaced and arranged on an outer wall of the casing proximate to the opening segment.

### BRIEF DESCRIPTION OF THE DRAWINGS

FIG. 1 is a perspective view showing the assembly of a pressure gauge according to a first embodiment of the present invention.
FIG. 2 is a perspective view showing the exploded components of the pressure gauge according to the first embodiment of the present invention.
FIG. 3 is a side plan view showing the assembly of the pressure gauge according to the first embodiment of the present invention.
FIG. 4 is a cross sectional view showing the assembly of the pressure gauge according to the first embodiment of the present invention.
FIG. 5 is a perspective view showing the assembly of a casing of the pressure gauge according to the first embodiment of the present invention.
FIG. 6 is a cross sectional view showing the assembly of the casing of the pressure gauge according to the first embodiment of the present invention.
FIG. 7 is a perspective view showing the exploded components of a pressure gauge according to a second embodiment of the present invention.
FIG. 8 is a perspective view showing the assembly of a conventional pressure gauge.
FIG. 9 is a perspective view showing the exploded components of the conventional pressure gauge.
FIG. 10 is a cross sectional view showing the assembly of the conventional pressure gauge.

### DETAILED DESCRIPTION OF THE PREFERRED EMBODIMENTS

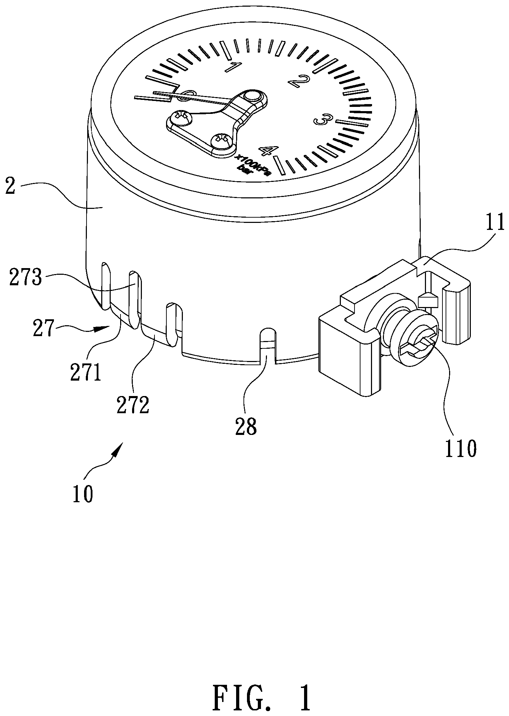

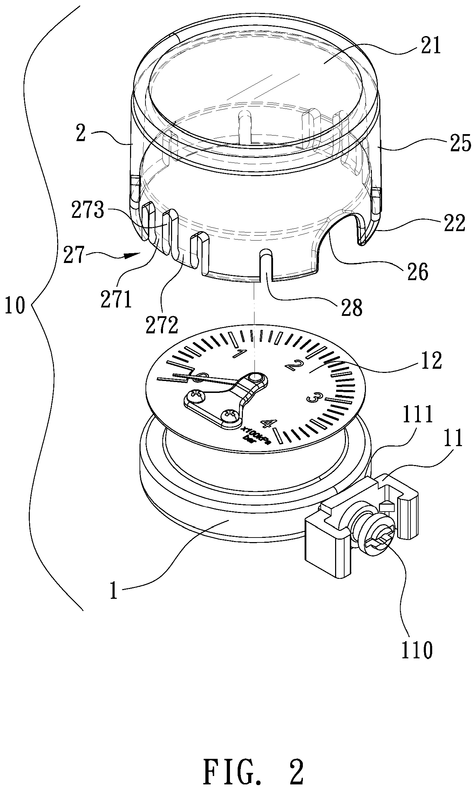

With reference to FIGS. 1 and 2, a pressure gauge 10 according to a first embodiment of the present invention comprises: a body 1 and a casing 2 covering the body 1.

The body 1 includes a connector 11 arranged on a peripheral side thereof and having an inlet pipe 110 configured to receive pressure air, and the body 1 further includes a scale disc 12 fixed on a top thereof so as to display a pressure value after receiving the pressure air.

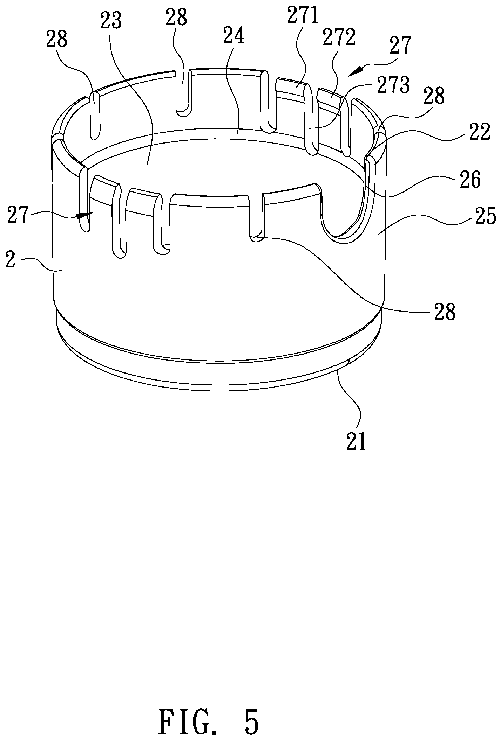

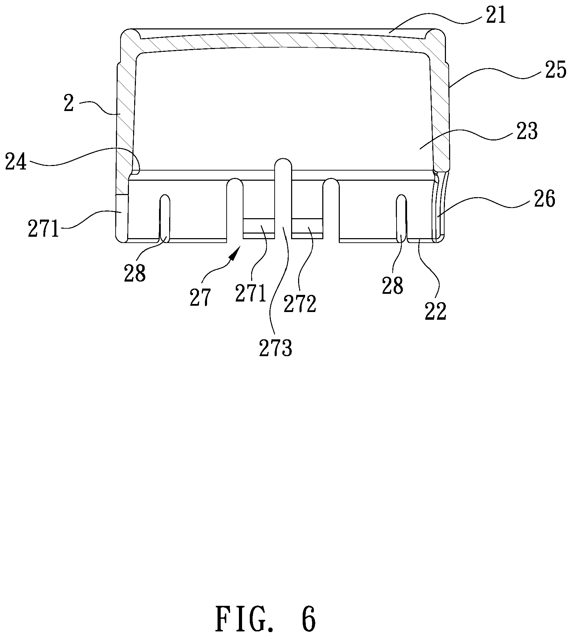

Referring to FIGS. 5 and 6, the casing 2 is transparent and includes a close segment 21 formed on a first end of the casing 2, an open segment 22 formed on a second end of the casing 2, an abutting rib 24 surrounding an inner wall 23 of the casing 2, and a cutout 26, multiple hooks 271, 272, multiple first slits 273, and multiple second slits 28 are spaced and arranged on the outer wall 25 of the casing 2 proximate to the open segment 22.

As shown in FIG. 5, any two adjacent of the multiple hooks 271, 272 are formed a hooking assembly 27, and each of the multiple first slits 273 is defined between any two adjacent hooks 271, 272. In this embodiment, two hooking assemblies 27 are separately formed on the outer wall 25 of the casing 2, and the multiple second slits 28 are spaced and arranged between the two hooking assemblies 27.

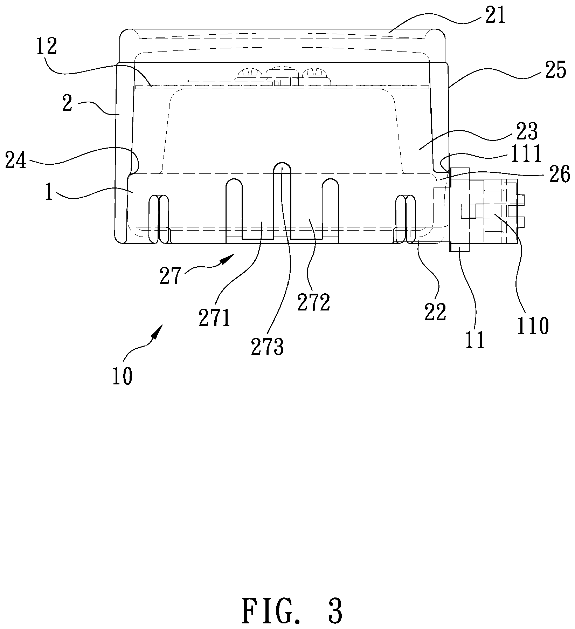

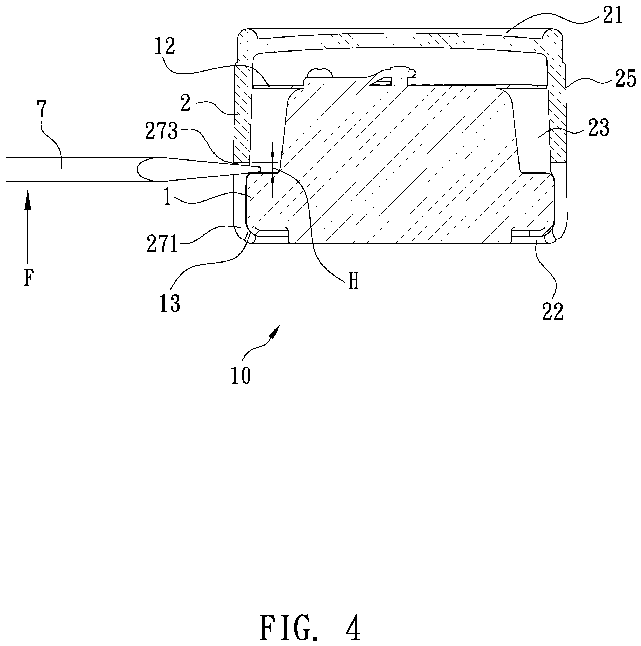

As illustrated in FIGS. 1-4, the casing 2 covers the body 1 from the open segment 22, wherein the cutout 26 of the casing 2 is retained with a back face 111 of the connector 11, the body 1 abuts against the abutting rib 24 of the casing 2, and the multiple hooks 271, 272 of the casing 2 hook an outer rim 13 of the body 1, wherein the multiple second slits 28 of the outer wall 25 of the casing 2 scatter a squeeze force of the casing 2 forced by the body 1 so as to avoid a split of the outer wall 25 of the casing 2. A height H, i.e. a spacing with a distance (H) in a direction from the top to a bottom of the body (1), is formed between the body 1 and a bottom of each first slit 273 of the casing 2, wherein the height H is more than zero. When one of any two adjacent hooks 271, 272 is broken, the other hook 271 or 272 hooks the outer rim 13 of the body 1, hence the casing 2 is connected with the body 1. When the casing 2 is removed from the body 1, a removal tool 7 is inserted into each first slit 273 and exerts a force F to remove the casing 2 from the body 1, as shown in FIG. 4.

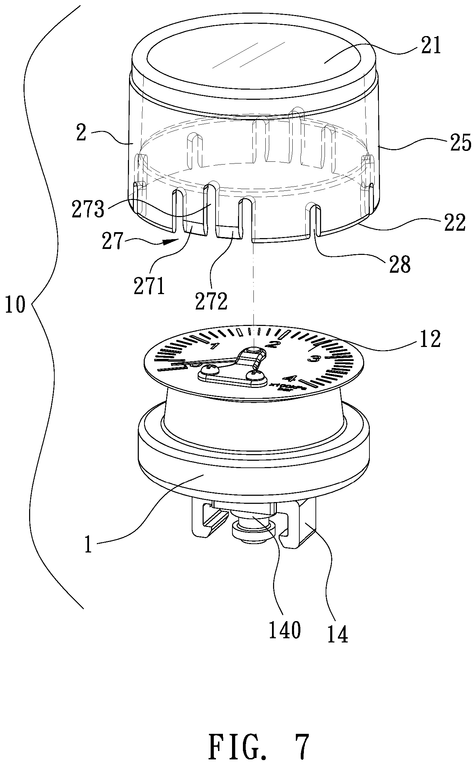

With reference to FIG. 7, in a second embodiment, an inlet pipe 140 is arranged on a bottom of the body 1 and is configured to receive pressure air.

Thereby, the pressure gauge 10 comprises the body 1 and the casing 2 covered on the body 1, wherein the casing 2 is covered on the body 1 from the open segment 22, the body 1 abuts against the abutting rib 24 of the inner wall 23 of the casing 2, and the multiple hooks 271, 272 of the casing 2 hook the outer rim 13 of the body 1, wherein the multiple second slits 28 of the outer wall 25 of the casing 2 scatter the squeeze force of the casing 2 forced by the body 1 so as to avoid the split of the outer wall 25 of the casing 2.

While the preferred embodiments of the invention have been set forth for the purpose of disclosure, modifications of the disclosed embodiments of the invention and other embodiments thereof may occur to those skilled in the art. Accordingly, the appended claims are intended to cover all embodiments.

## Claims

1. A pressure gauge (10) comprising:
a body (1) including a scale disc (12) fixed on a top of the body (1);
a casing (2) being transparent for covering the body (1) and including a close segment (21) formed on a first end of the casing (2), an open segment (22) formed on a second end of the casing (2), and multiple hooks (271), (272) spaced and arranged on an outer wall (25) of the casing (2) proximate to the open segment (22),
**characterised in that**
the casing (2) includes an abutting rib (24) surrounding an inner wall (23) of the casing (2) against which rib (24) the body (1) abuts,
any two adjacent of the multiple hooks (271, 272) form a hooking assembly (27), a first slit (273) is defined between the two adjacent hooks (271, 272) of the hooking assembly (27), and a bottom of the first slit (273) penetrates through the abutting rib (24), wherein two hooking assemblies (27) are separately formed on the outer wall (25) of the casing (2), and multiple second slits (28) are spaced and arranged between the two hooking assemblies (27),
wherein a spacing with a distance (H) in a direction from the top to a bottom of the body (1) is formed between the body (1) and the bottom of each first slit (273) of the casing (2), and the distance (H) is more than zero so that a removal tool (7) is insertable into the spacing to exert a force (F) to remove the casing (2) from the body (1).

2. The pressure gauge (10) as claimed in claim 1, wherein the body (1) includes a connector (11) arranged on a peripheral side thereof, and the connector (11) has an inlet pipe (110) configured to receive pressure air, wherein the casing (2) further includes a cutout (26) arranged on the outer wall (25) of the casing (2) proximate to the open segment (22).

3. The pressure gauge (10) as claimed in claim 1, wherein an inlet pipe (140) is arranged on the bottom of the body (1) and is configured to receive pressure air.

## Patentansprüche

1. Druckmesser (10), umfassend:
einen Körper (1), der eine Skalenscheibe (12) enthält, die an einer Oberseite des Körpers (1) befestigt ist;
ein Gehäuse (2), das transparent ist, zum Abdecken des Körpers (1), und das ein geschlossenes Segment (21), das an einem ersten Ende des Gehäuses (2) ausgebildet ist, ein offenes Segment (22), das an einem zweiten Ende des Gehäuses (2) ausgebildet ist, und mehrere Haken (271), (272) enthält, die an einer Außenwand (25) des Gehäuses (2) in der Nähe des offenen Segments (22) beabstandet und angeordnet sind,
**dadurch gekennzeichnet, dass**
das Gehäuse (2) eine anliegende Rippe (24) aufweist, die eine Innenwand (23) des Gehäuses (2) umgibt, an welche die Rippe (24) des Körpers (1) anliegt,
zwei beliebige benachbarte der mehreren Haken (271, 272) eine Einhakanordnung (27) bilden, ein erster Schlitz (273) zwischen den beiden benachbarten Haken (271, 272) der Einhakanordnung (27) definiert ist und ein Boden des ersten Schlitzes (273) die anliegende Rippe (24) durchdringt, wobei zwei Einhakanordnungen (27) separat an der Außenwand (25) des Gehäuses (2) ausgebildet sind und mehrere zweite Schlitze (28) zwischen den beiden Einhakanordnungen (27) beabstandet und angeordnet sind,
wobei eine Beabstandung mit einer Distanz (H) in einer Richtung von der Oberseite zu einer Unterseite des Körpers (1) zwischen dem Körper (1) und der Unterseite jedes ersten Schlitzes (273) des Gehäuses (2) gebildet wird, und die Distanz (H) größer als Null ist, so dass ein Entfernungswerkzeug (7) in die Beabstandung einführbar ist, um eine Kraft (F) zum Entfernen des Gehäuses (2) von dem Körper (1) auszuüben.

2. Druckmesser (10) gemäß Anspruch 1, wobei der Körper (1) ein Verbindungsstück (11) enthält, das an einer Umfangsseite davon angeordnet ist, und das Verbindungsstück (11) ein Einlassrohr (110) aufweist, das zur Aufnahme von Druckluft konfiguriert ist, wobei das Gehäuse (2) ferner einen Ausschnitt (26) enthält, der an der Außenwand (25) des Gehäuses (2) in der Nähe des offenen Segments (22) angeordnet ist.

3. Druckmesser (10) gemäß Anspruch 1, wobei ein Einlassrohr (140) an der Unterseite des Gehäuses (1) angeordnet ist und zur Aufnahme von Druckluft konfiguriert ist.

## Revendications

1. Un manomètre (10) comprenant :
un corps (1) comprenant un disque gradué (12) fixé sur une partie supérieure du corps (1) ;
un boîtier (2) transparent pour couvrir le corps (1) et comprenant un segment fermé (21) formé sur une première extrémité du boîtier (2), un segment ouvert (22) formé sur une deuxième extrémité du boîtier (2), et une pluralité de crochets (271), (272) espacés et agencés sur une paroi externe (25) du boîtier (2) à proximité du segment ouvert (22),
**caractérisé en ce que**
le boîtier (2) comprend une nervure de butée (24) entourant une paroi interne (23) du boîtier (2) contre laquelle nervure (24) le corps (1) vient en butée,
deux crochets adjacents (271, 272) de la pluralité de crochets forment un ensemble d'accrochage (27), une première fente (273) est définie entre les deux crochets adjacents (271, 272) de l'ensemble d'accrochage (27), et un fond de la première fente (273) pénètre à travers la nervure de butée (24), deux ensembles d'accrochage (27) étant formés séparément sur la paroi externe (25) du boîtier (2), et une pluralité de deuxièmes fentes (28) sont espacées et agencées entre les deux ensembles d'accrochage (27),
un espacement avec une distance (H) dans une direction allant du haut vers le bas du corps (1) étant formé entre le corps (1) et le fond de chaque première fente (273) du boîtier (2), et la distance (H) étant supérieure à zéro de sorte qu'un outil de retrait (7) est apte à être inséré dans l'espacement pour exercer une force (F) afin de retirer le boîtier (2) par rapport au corps (1).

2. Le manomètre (10) selon la revendication 1, dans lequel le corps (1) comprend un connecteur (11) agencé sur un côté périphérique de celui-ci, et le connecteur (11) a un tuyau d'entrée (110) configuré pour recevoir de l'air sous pression, le boîtier (2) comprenant en outre une découpe (26) agencée sur la paroi externe (25) du boîtier (2) à proximité du segment ouvert (22).

3. Le manomètre (10) selon la revendication 1, dans lequel un tuyau d'entrée (140) est agencé sur le fond du corps (1) et est configuré pour recevoir de l'air sous pression.
